# EUROPEAN PATENT APPLICATION

(11) **EP 1 801 177 A1**
(43) Date of publication of application: **27.06.2007**
(21) Application number: 05785799.7
(22) Date of filing: 15.09.2005
(51) Int. Cl.: C09J 5/00, C09J 183/04

(54) **PORTABLE BONDING DEVICE AND BONDING METHOD**

(30) Priority: 16.09.2004 JP 2004269084
(71) Applicant: Dow Corning Toray Co., Ltd., Tokyo 100-0005 (JP); GLASS CUBE CO., LTD., Takaoka-shi, Toyama 933-0974 (JP); So-Ken Co., Ltd, Kamiina-gun, Nagano, 3994585 (JP)
(72) Inventor: TANAKA, Koji, c/o Dow Corning Toray Co. Ltd., Tokyo 100-0005 (JP); HIRAI, Kazuo, c/o Dow Corning Toray Co. Ltd., Ichihara-shi, Chiba 299-0108 (JP); HORIOKA, Nobuyoshi, Takaoka-shi, Toyama 933-0974 (JP); KAWAKAMI, Takashi, Kamiina-gun, Nagano 399-4585 (JP)
(74) Representative: Michelet, Alain
(86) International application number: PCT/JP2005/017423
(87) International publication number: WO 2006/038469

(57) **Abstract**

Disclosed is a portable bonding device almost completely preventing inclusion of air bubbles in the intervening adhesive layer between two opposite objects bonded together, and free of the necessity of firmly holding the device with hands while bonding.
The portable bonding device permits the bonding of an adherend to a bonding base material by using a thermosetting resin adhesive on site, and it comprises: a hollow cylindrical body whose bottom end is open; a longitudinally reciprocating piston body slidably movable inside the hollow cylindrical body; a vacuum pad fixed to the bottom end of the cylindrical body to form an airtight chamber delimited by the inner wall of the cylindrical body, the piston body and the bonding base material when the vacuum pad is applied to the bonding base material; a pressing member fixed to the lower end of the rod-like extension, movable between the operative position in which the pressing member pushes the adherend against the bonding base material and the inoperative position in which it is apart from the bonding base material; a heater inside the cylindrical body to heat an intervening adhesive applied between the adherend and the bonding base material; and vacuum means for creating a vacuum in the airtight chamber.

## Description

### Field of the Invention

The present invention relates to a portable bonding device, and particularly to a portable bonding device using a thermosetting adhesive.

### Prior Art

Patent Application Laid-Open No.2000-220615 shows a portable bonding-and-debonding device. The bonding-and-debonding device of a projection object as described in the Laid-Open is used in bonding the projection object to or removing from the adherend object by melting the thermosetting adhesive between the base of the projection object and the surface of the adherend object., wherein at least one of an adherend object and the base of the projection object to be bonded to the adherend object is made of an electrically conductive material. The bonding-and-debonding device comprises: a hollow cylindrical body to accommodate the projection object; and a heating coil spirally wound around the cylindrical body, thus facing the base of the projection object when the cylindrical space accommodates the projection part. No matter which may be made of metal, the projection object or the counter-object, the metal object is heated by the electromagnetic induction effect, which is caused by the alternating magnetic field established when a high-frequency electric current flows in the heating coil. Then, the adhesive is melted, and in case the device is used in the bonding mode the projection object is bonded to the counter-object. Otherwise, in the debonding mode the adhesive is melted, allowing the projection object to be free from the counter-object for reuse; the projection object can be removed without being damaged.
The bonding-and-debonding device works satisfactorily in bonding a projection object to a counter-object. It, however, has some defects as follows:
1) the adhesive layer which is formed after being hardened inevitably contains air bubbles; and
2) the thermosetting adhesive causes its bonding effect when being heated and hardened, but the adhesive takes a relatively long time (20 to 30 or more minutes) to harden, and a worker must firmly hold the device with hands for the whole length of time, which is a tedious and laborious work.
Incidentally a sheet-like, one component, thermosetting silicone rubber adhesive is produced by Dow Corning Toray Co., Ltd. and commercially available (Registered Trade Name: SOTEFA). This thermosetting silicone rubber adhesive is excellent in transparency and bonding strength. Use is made of the adhesive to bond two transparent glass plates together, and then the opposite plates are firmly bonded with the intervening adhesive layer almost invisible, thus providing an integral transparent lamination having a pleasing appearance.
Air bubbles sometimes appear inside the intervening adhesive layer, which air bubbles can be seen through the glass lamination. With a view to preventing inclusion of such air bubbles within the thermosetting silicone rubber adhesive layer an autoclave is used to continue heating under pressure. Disadvantageously this measure requires a relatively large bonding installation, and even in case small articles are bonded, the bonding work needs to be done in factory. Therefore, there has been an ever increasing demand for a portable bonding device which permits a required bonding work to be done on site. As for the portable bonding-and-debonding device described above, disadvantageously it causes inevitable inclusion of air bubbles in the adhesive layer.

### Disclosure of Invention

In view of the above one object of the present invention is to provide a portable bonding device capable of almost completely preventing inclusion of air bubbles in the intervening adhesive layer between two opposite objects together bonded, and free of the necessity of firmly holding the device with hands while bonding.
Another object of the present invention is to provide a bonding method that assures almost complete exclusion of air bubbles from the intervening adhesive layer between the opposite objects to be bonded together.
1) To attain the said one object a portable bonding device according to the present invention which permits the bonding of a "to be bonded" object or adherend to a bonding base material by using a thermosetting resin adhesive on site, is characterized in that it comprises: a cylindrical body whose bottom end is open; a vacuum pad fixed to the open bottom end of the cylindrical body to be pushed against the bonding base material, thereby providing an airtight or hermetically sealed chamber delimited by the bonding base material and the inner wall of the cylindrical body; heating means provided inside the cylindrical body for heating the thermosetting adhesive applied and laid between the adherend and the bonding base material; and evacuating means for creating a vacuum in the airtight chamber.
2) The portable bonding device as described above in Paragraph 1 further comprises a pressing member movably held inside the cylindrical body, the pressing member being movable between the operative position in which the pressing member pushes the adherend against the bonding base material and the inoperative position in which the pressing member remains apart from the adherend.
3) The portable bonding device as described above in Paragraph 1 or 2 further comprises heating temperature setting means for keeping the adherend at a predetermined temperature.
4) The portable bonding device as described above in Paragraph 3 further comprises temperature detecting means provided inside the pressing means.
5) The portable bonding device as described above in any of Paragraphs 1 to 4 further comprises means for setting the vacuum created by the evacuating means inside the airtight chamber for a predetermined degree of vacuum.
6) The portable bonding device according to any of Paragraphs 1 to 5 further comprises a carrier body for bearing the heating means, the cylindrical body and the carrier body being a hollow figure with round ends and long straight sides.
7) In the portable bonding device according to any of Paragraphs 1 to 6 the heating means is so designed that it may conduct the electrical induction heating.
8) In the portable bonding device according to any of Paragraphs 1 to 7 the thermosetting resin adhesive is a thermosetting silicone rubber adhesive.
9) A portable bonding device according to the present invention which permits the bonding of an adherend to a bonding base material by using a thermosetting resin adhesive on site, is characterized in that it comprises: a hollow cylindrical body; a longitudinally reciprocating piston body slidably movable inside the hollow cylindrical body; a vacuum pad fixed to the bottom end of the cylindrical body to form an airtight chamber delimited by the inner wall of the cylindrical body, the piston body and the bonding base material when the vacuum pad is applied to the bonding base material; a rod-like extension integrally connected to and extending downward from the bottom surface of the piston body; a pressing member fixed to the lower end of the rod-like extension to push the adherend against the bonding base material; a heater; a heater carrier member slidably fitted on the rod-like extension, comprising an annular stage flat larger than the pressing member and laterally extending at a level higher than the pressing member and a carrier body integrally connected to and downwards extending from the lower surface of the annular stage flat with the heater fixed to its side; a pushing spring positioned between the annular stage flat and the piston body to apply a pushing force to the heater carrier member apart from the piston body; and vacuum means for creating a vacuum in the airtight chamber.
10) To attain the said another object a bonding method according to the present invention comprises the steps of creating a vacuum around an adherend laid on a bonding base material with a thermosetting resin adhesive applied or laid therebetween; and heating the thermosetting resin adhesive to bond the adherend to the bonding base material.
11) A bonding method as described in Paragraph 10 uses a portable bonding device according to any of Paragraph 1 to 7 and 9 to bond the adherend to the bonding base material.
12) In a bonding method according to Paragraph 10 or 11 the thermosetting resin adhesive is a thermosetting silicone rubber adhesive.
A portable bonding device according to the present invention can be conveniently used without the necessity of firmly holding the device with hands while a required bonding work is done because the cylindrical body is sucked and attracted to the bonding base material in the vacuum created in the airtight chamber, which is formed in the cylindrical body.
Partly owing to the pressing of the adhesive layer by the pressing member and partly owing to the vacuum created in the airtight chamber the adhesive layer is guaranteed to be free of air bubbles almost completely, thus providing a bonded lamination having a pleasing appearance and a good bonding strength (40 to 50 kg/cm² at maximum in case of a thermosetting silicone rubber adhesive used).
Also, advantageously a adherend can be attached to a bonding base material without making any holes.

### Brief Description of the Drawings

The present invention will now be described in detail with reference to the accompanying drawings, in which:
Fig.1 is a longitudinal section of a portable bonding device according to one embodiment of the present invention, showing an associated controller as viewed from the front side;
Fig.2 is a similar longitudinal section, but illustrating how a required bonding work can be done with the portable bonding device as shown in Fig.1 (an airtight chamber being formed);
Fig.3 is a similar longitudinal section, but illustrating how a required bonding work can be done with the portable bonding device as shown in Fig.1 (the adherend being pushed against the bonding base material);
Fig.4 illustrates an adherend with an adhesive sheet applied to its bottom surface;
Fig.5 illustrates a bonding base material and an overlying adherend with an intervening adhesive sheet therebetween;
Fig.6 is a longitudinal section of a portable bonding device whose vacuum pad is modified to a bellows; and
Fig.7 illustrates how the portable bonding device of Fig.6 works.

### Description of the Preferred Embodiment

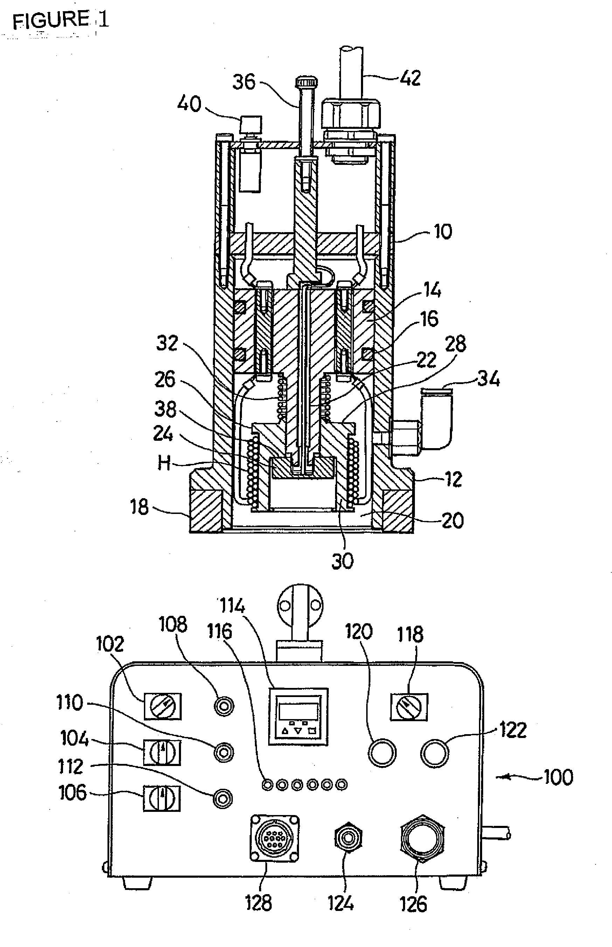

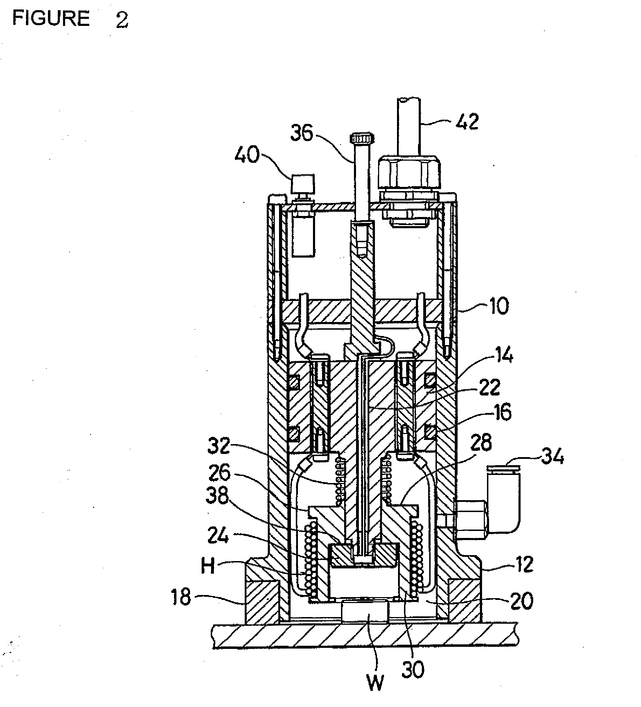

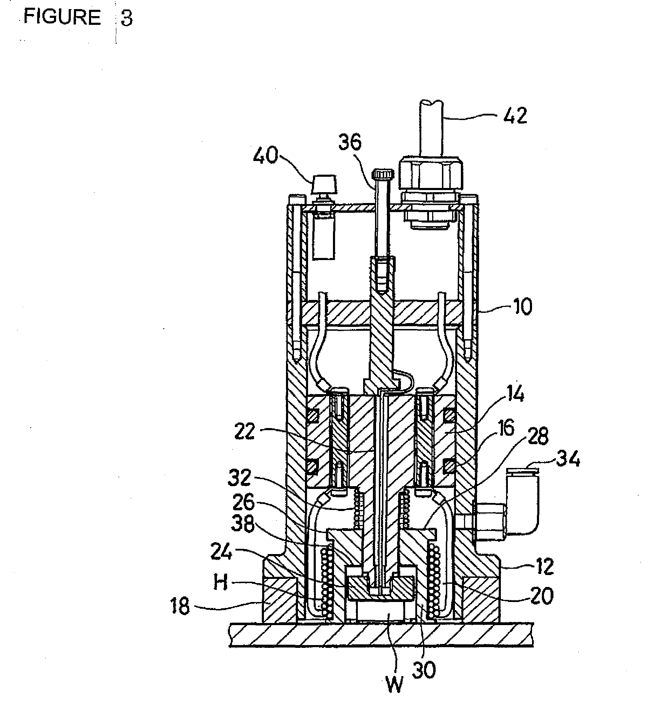

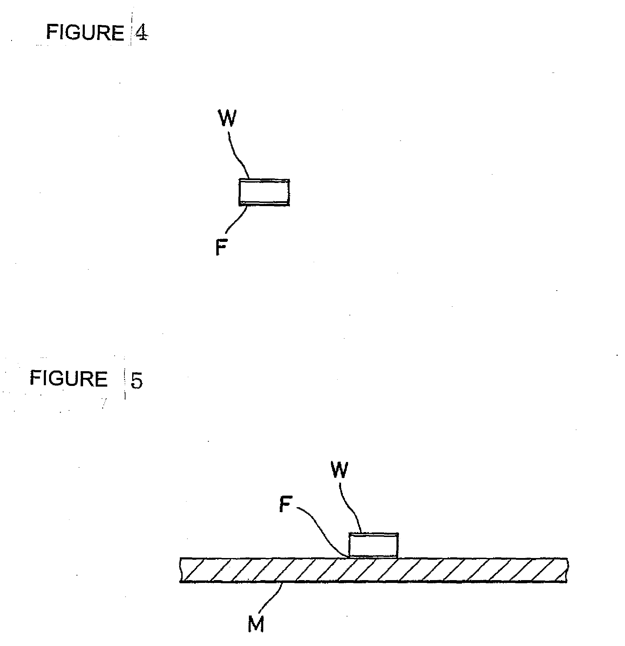

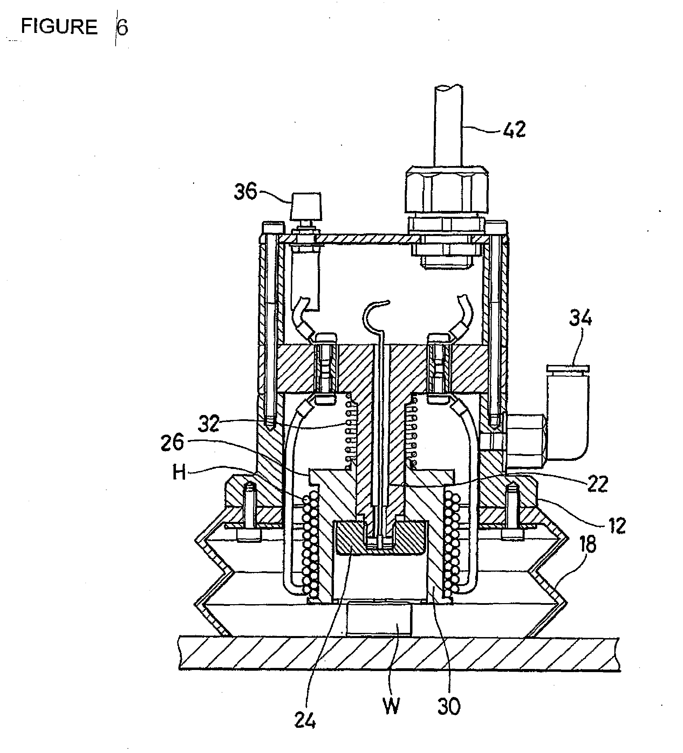

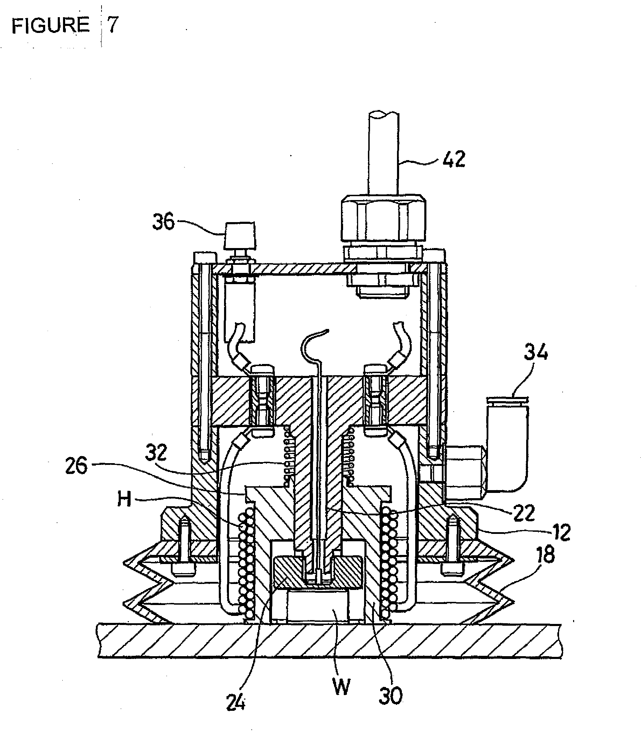

Referring to Figs.1 to 5, a portable bonding device according to one embodiment of the present invention is described below.
Some examples of thermosetting resin adhesive appropriate for the purpose are given in the following: epoxy resin adhesive, acrylic resin adhesive, vinyl acetate resin adhesive, polyvinyl acetal adhesive, polystyrene adhesive, polymethyl methacrylate adhesive, polyimide adhesive, polyurethane resin adhesive, rubber phenolic resin adhesive and silicone adhesive. These thermosetting resin adhesives preferably remain in the form of solid or semi-solid film at normal temperature because of easy workability and reduction of injected air bubbles to possible minimum. From the viewpoints of appearance, weather resistance and bonding endurance a thermosetting silicone rubber adhesive as disclosed in Patent Application Laid-Open No.2002-294202 is most preferably used, the properties of which thermosetting adhesive are: Williams plasticity (JIS K6249, 25°C) is 400 to 800; Green strength (25°C) is 0.2 to 0.5Mpa; and transparency of one-millimeter-thick hardened sheet to visible light ray is 50 or more %. The intervening silicone rubber adhesive between a piece of metal or glass (adherend) and a sheet of glass (bonding base object) is invisible, providing a pleasing integral body.
Referring to Fig.1, a bonding device according to one embodiment of the present invention associates with a controlling device 100. The bonding device generally comprises a heating vacuum cylinder 10, which is designed to perform a bonding operation, and is connected to the controlling device 100 in use. Specifically, the heating vacuum cylinder 10 includes a hollow cylindrical body 12, and a longitudinally reciprocating piston body 14 is slidably movable inside the hollow cylindrical body 12 with O-rings 16 around the piston body 14, thereby making the remaining circumferential interspace airtight. A flexible vacuum pad 18 such as a sponge is fixed to the bottom end of the cylindrical body 12 to form an airtight chamber 20 delimited by the inner wall of the cylindrical body 12, the piston body 14 and a bonding base material M when the bonding device is used with the vacuum pad 18 applied to the bonding base material M (see Fig.2). A rod-like extension 22 is integrally connected to and extends downward from the bottom surface of the piston body 14. A pressing member 24 is fixed to the lower end of the rod-like extension 22 to push an adherend W against the bonding base material M (see Fig.2). Preferably, the pressing member 24 is a disk as large as the adherend W. An electrical induction-heating coil IH is used as heating means or heater. A heater carrier member 26 is longitudinally slidably fitted on the rod-like extension 22 at a level higher than the pressing member 24. The heater carrier member 26 comprises an annular stage flat 28 larger than the pressing member 24 and a carrier body 30 integrally connected to and downwards extending from the lower surface of the annular stage flat 28. The carrier body 30 has the electrical induction heating coil IH fixed to its side. Specifically, the carrier body 30 is a hollow cylinder whose diameter is somewhat larger than the diameter of the pressing member 24, and the pressing member 24 is slidably movable in the hollow cylinder 30. In other words, the pressing member 24 can move relative to the hollow cylinder 30. As seen from Fig.3, the hollow space of the carrier body 30 is large enough to allow the adherend W to enter.
A pushing spring 32 is positioned between the annular stage flat 28 and the piston body 14 to apply a pushing force to the heater carrier member 26 apart from the piston body 14. In the state of being in abutment with the heater carrier member 26 the pressing member 24 takes a role of stopper to prevent the heater carrier member 26 from further descending on the rod-like extension 22 under the influence of the pushing spring 32.
The hollow cylindrical body 12 has a connector 34 fixed to its side for communicating with a vacuum pump (not shown) and creating a vacuum in the airtight chamber 20.
The heating vacuum cylinder 10 is provided with an on-and-off switch (not shown) to perform the on-and-off control of the vacuum pump. A rod 36 is integrally connected to the piston body 14 to raise the same, and the top of the heating vacuum cylinder 10 has a switch 40 and a harness 42 with a connector attached to its tip.
The controlling device 100 comprises heating temperature setting means (not shown) comprising a microcomputer to hold the created vacuum space at a predetermined temperature and degree of vacuum. On the front of the controller 100 there are arranged a power supply switch 102 for turning the electric power supply on and off, a temperature selector switch 104 permitting for example, a step-wise selection among three different temperatures, 130°C, 150°C and 170°C, a time selector 106 permitting a selection to be made for example, among three different heating periods, 15 minutes, 20 minutes and 30 minutes, a power indicator lamp 108 responsive to the putting the power supply in circuit for turning "on", a heating indicator lamp 110 responsive to the heating operation of the heater for turning "on" and responsive to abnormal heating condition for blinking, a vacuum indicator lamp 112 responsive to the operation of the vacuum pump for turning "on" and responsive to abnormal vacuum condition for blinking, a vacuum indicator 114 for indicating the set vacuum and instantaneous vacuum, a temperature indicator 116 for indicating whether the instantaneous temperature is equal to the set temperature or not, a manual-to-automatic operation switching unit 118 for making a selection between the manual and automatic operation, a heating switch 120 for manually putting the heater in operation, a vacuum switch 122 for manually putting the vacuum pump in operation, a vacuum connector 124, a regulator 126 for setting the vacuum for a desired degree of vacuum and a counter connector 128 for coupling the connector of the harness 42, which is fixed to the heating vacuum cylinder 10.
Also, the heating temperature setting means includes temperature detecting means or thermistor 38, which is arranged in the pressing member 24.
Now, a description is directed to how the portable bonding device works:
1. An associated vacuum pipe connects the controller and the heating vacuum cylinder.
2. The plug of the electric cord of the controller power supply is stuck into the outlet (ac 100 volts).
3. The ground-fault interrupter is put in operation.
4. The power supply switch turns on.
5. The power indicator lamp turns on; the vacuum indicator lamp turns on, and the suction fan starts rotating.
6. The manual-to-auto switching unit is set for the automatic operation.
7. The temperature selector switch is set for example, for temperature 150°C.
8. The time selector is set for example, for 30 minutes.
9. The vacuum indicator is actuated.
10. An adherend such as iron or SUS fitting metal is cleaned by removing the dust or oil from its surface.
11. An adhesive sheet is cut to the same size as the adherend.
12. The protective film is peeled off from one side F of the adhesive sheet, and the adhesive sheet is applied to the adherend as shown in Fig.4.
13. A bonding base material (glass, artificial marble and other materials) is cleaned by removing the dust or oil from its surface.
14. The remaining protective film is peeled off from the adhesive sheet, which is already applied to the adherend, and then, the adherend-and-adhesive sheet combination is put on a bonding base material M as shown in Fig.5.
15. In case a thermosetting silicone rubber adhesive is used, the adherend W can be tentatively fixed to the bonding base material M.
16. The heating vacuum cylinder is put on the bonding base material M to enclose the adherend W with their centerlines aligned.
17. The switch on the heating vacuum cylinder is depressed once.
18. The vacuum pump is put in operation.
19. The electromagnet valve opens in the controller, creating a negative pressure in the airtight chamber formed in the heating vacuum cylinder.
20. As the negative pressure is being built in the airtight chamber, the piston assembly is pulled down toward the bonding base material M.
21. The induction heating coil-and-carrier assembly is put in contact with the bonding base material, stopping and staying there, as seen from Fig.3. On the other hand the piston body continues moving downward while compressing the pushing spring.
22. The pressing member is put in contact with the adherend, pressing the same. In addition, the adherend is pushed against the bonding base material under the vacuum influence.
23. The inner pressure is lowered until it reaches the degree of vacuum set by the regulator and the vacuum indicator.
24. The adhesive sheet is debubbled under the vacuum influence.
25. The microcomputer confirms that the set pressure is reached in the set length of time. Then, the vacuum is already created in the airtight chamber delimited by the bonding base material, the cylindrical wall and the piston assembly. Therefore, once the heating vacuum cylinder has been put in horizontal posture with hands, it can remain in the horizontal posture with the hands left apart from the heating vacuum cylinder. Therefore, a worker can use a plurality of bonding devices at the same time, allowing the bonding works to be done in parallel. Accordingly the working efficiency is improved.
26. The vacuum indicator lamp is responsive to abnormal vacuum condition for blinking, and a buzzer sounds.
27. When the set degree of vacuum is reached, the heating work is ready to start.
28. An electric current flows in the induction heating coil, and the heating starts.
29. The thermister detects the temperature, and the microcomputer performs a required control.
30. Making the thermal indicator turn on indicates the temperature rise.
31. The microcomputer confirms that the set temperature is reached in the set length of time.
32. The heating indicator lamp is responsive to abnormal heating condition for blinking, and the buzzer sounds.
33. When the heating work is over, the buzzer sounds, and the heating operation is terminated.
34. The switch is depressed again.
35. The vacuum pump turns off, and the electromagnet valve opens to break the vacuum.
36. The atmospheric pressure prevails in the airtight chamber, thus putting the heating vacuum cylinder apart from the bonding base material.
37. Finally, the rod is pulled up until the piston assembly returns to its initial position. Thus, the bonding work is finished.
As may be understood from the above, the bonding device described above is so designed that the piston assembly is driven toward the bonding base material under the influence of vacuum, and accordingly the heater-and-carrier body (H, 30) and the pressing member 24 are moved toward the adherend lying on the bonding base material. A variety of required mechanisms to cause such movement, however, would be obvious to those skilled in the art, as for instance, follows: referring to Fig.6, a bellows may be used as the vacuum pad 18, and then, the bellows is responsive to the vacuum when created for collapsing, thereby moving the cylindrical body toward the bonding base material as seen from Fig.7. The bonding device equipped with such modified vacuum pad as shown in Figs.6 and 7, is structurally similar to the bonding device as shown in Figs.1 to 5 except for the bellows vacuum pad, and therefore, further description is unnecessary. The bonding devices described above use the pressing member 24, which, however, can be omitted; certain kinds of adhesive are responsive to finger-pressure for sticking and tentatively holding the adherend on the bonding base material, or otherwise, a heat-resistive, pressure-sensitive adhesive tape may be used for sticking and tentatively holding the adherend on the bonding base material with the thermosetting adhesive intervening between the pressure-sensitive adhesive tape and the adherend.,
The electrical induction heating is used in the above described bonding devices, but a bonding device according to the present invention is not restrictive to the use of the electrical induction heating. Any other heating mode appropriate for the purpose may be used. In case the adherend is tentatively attached to the bonding base material, the mechanism for raising and lowering the heater-and-carrier assembly (H, 30) may be omitted.

## Claims

1. A portable bonding device which permits the bonding of an adherend to a bonding base material by using a thermosetting adhesive on site, is **characterized in that** it comprises: a cylindrical body whose bottom end is open; a vacuum pad fixed to the open bottom end of the cylindrical body to be pushed against the bonding base material, thereby providing an airtight chamber delimited by the bonding base material and the inner wall of the cylindrical body; heating means provided inside the cylindrical body for heating the adhesive applied and laid between the adherend and the bonding base material; and evacuating means for creating a vacuum in the airtight chamber.

2. A portable bonding device according to claim 1 wherein it further comprises a pressing member movably held inside the cylindrical body, the pressing member being movable between the operative position in which the pressing member pushes the adherend against the bonding base material and the inoperative position in which the pressing member remains apart from the adherend.

3. A portable bonding device according to claim 1 or 2 wherein it further comprises heating temperature setting means for keeping the adherend at a predetermined temperature.

4. A portable bonding device according to claim 3 wherein it further comprises temperature detecting means provided inside the pressing means.

5. A portable bonding device according to any of claims 1 to 4 wherein it further comprises means for setting the vacuum created by the evacuating means inside the airtight chamber for a predetermined degree of vacuum.

6. A portable bonding device according to any of claims 1 to 5 wherein it further comprises a carrier body for bearing the heating means, the cylindrical body and the carrier body being a hollow figure with round ends and long straight sides.

7. A portable bonding device according to any of claims 1 to 6 wherein the heating means is so designed that it may conduct the electrical induction heating.

8. A portable bonding device according to any of claims 1 to 7 wherein the thermosetting adhesive is a thermosetting silicone rubber adhesive.

9. A portable bonding device which permits the bonding of an adherend to a bonding base material by using a thermosetting adhesive on site, is **characterized in that** it comprises: a hollow cylindrical body; a longitudinally reciprocating piston body slidably movable inside the hollow cylindrical body; a vacuum pad fixed to the bottom end of the cylindrical body to form an airtight chamber delimited by the inner wall of the cylindrical body, the piston body and the bonding base material when the vacuum pad is applied to the bonding base material; a rod-like extension integrally connected to and extending downward from the bottom surface of the piston body; a pressing member fixed to the lower end of the rod-like extension to push the adherend against the bonding base material; a heater; a heater carrier member comprising an annular stage flat larger than the pressing member and being slidably fitted on the rod-like extension at a level higher than the pressing member and a carrier body downwards extending from the lower surface of the annular stage flat with the heater fixed to its side; a pushing spring positioned between the annular stage flat and the piston body to apply a pushing force to the heater carrier member apart from the piston body; and vacuum means for creating a vacuum in the airtight chamber.

10. A bonding method which permits the bonding of a adherend to a bonding base material by using a thermosetting resin adhesive on site, **characterized in that** it comprises the steps of creating a vacuum around an adherend laid on a bonding base material with a thermosetting adhesive applied or laid therebetween; and heating the thermosetting adhesive to bond the adherend to the bonding base material.

11. A bonding method according to claim 10 wherein it uses a portable bonding device according to any of Paragraph 1 to 7 and 9 to bond the adherend to the bonding base material.

12. A bonding method according to claim 10 or 11 wherein the thermosetting resin adhesive is a thermosetting silicone rubber adhesive.
